# EUROPEAN PATENT APPLICATION

(11) **EP 2 677 599 A1**
(43) Date of publication of application: **25.12.2013**
(21) Application number: 12173240.8
(22) Date of filing: 22.06.2012
(51) Int. Cl.: H01Q 1/24, H01Q 21/28, H04B 17/00

(54) **Method and apparatus for testing antennas**

(71) Applicant: BlackBerry Limited, Waterloo, ON N2K 0A7 (CA)
(72) Inventor: Katz, Marshall, Joseph, Rolling Meadows, IL 60008 (US)
(74) Representative: MERH-IP Matias Erny Reichl Hoffmann

(57) **Abstract**

A method and apparatus for testing antennas are provided. A given power level is transmitted on a first antenna of a device, via a processor. It is determined, at the processor, that the first antenna and a second antenna of the device are properly installed when received power at the second antenna is about greater than or equal to a threshold power level.

## Description

### FIELD

The specification relates generally to antennas, and specifically to a method and apparatus for testing antennas.

### BACKGROUND

During manufacturing of devices that include radios, such as cell phones and the like, antenna installation must be verified to determine that the antennas are properly assembled and connected. In a manufacturing environment, this can be difficult to accomplish and often needs expensive external test equipment such as RF power meters and signal generators.

### BACKGROUND

An aspect of the specification provides a device comprising: a processor, a first antenna and a second antenna, the processor enabled to transmit a given power level on the first antenna; and, determine that the first antenna and the second antenna are properly installed when received power at the second antenna is about greater than or equal to a threshold power level.

The processor can be further enabled to operate the first antennas in a transmit mode; and, operate the second antenna in a receive mode.

Each of the first antenna and the second antenna can be omnidirectional.

At least one of the first antenna and the second antenna can be a directional antenna and the second antenna can be arranged to receive power from the first antenna.

The device can further comprise an indicator device, and the processor can be further enabled to control the indicator device to provide an indication of proper installation when the received power at the second antenna is about greater than or equal to the threshold power level, and otherwise control the indicator device provide an indication of improper installation when the received power at the second antenna is below the threshold power level.

The device can further comprise a power detector for detecting power at the second antenna, the processor further enabled to determine the received power by communicating with the power detector; and, a directional coupler connecting the second antenna with the power detector.

The device can further comprise a power detector for detecting power at the second antenna, the processor further enabled to determine the received power by communicating with the power detector; and, a switch for switching the second antenna from an antenna receive circuit to the power detector.

The processor can be further enabled to tune the second antenna to a same channel on which the first antenna is transmitting.

The processor can be further enabled to turn the first antenna on and off in a given sequence; and determine that the first antenna and the second antenna are properly installed when the received power at the second antenna is received according to the given sequence and is above the threshold power level.

Another aspect of the specification provides a method comprising transmitting, via a processor of a device, a given power level on a first antenna of the device; and, determining, at the processor, that the first antenna and a second antenna of the device are properly installed when received power at the second antenna is about greater than or equal to a threshold power level.

The method can further comprise operating, via the processor, the first antennas in a transmit mode; and, operating the second antenna in a receive mode.

Each of the first antenna and the second antenna can be omnidirectional.

At least one of the first antenna and the second antenna can be a directional antenna and the second antenna can be arranged to receive power from the first antenna.

The method can further comprise controlling, via the processor, an indicator device to provide an indication of proper installation when the received power at the second antenna is about greater than or equal to the threshold power level, and otherwise controlling, via the processor, the indicator device provide an indication of improper installation when the received power at the second antenna is below the threshold power level.

The method can further comprise determining, via the processor, the received power by communicating with a power detector for detecting power at the second antenna, the device can further comprise a directional coupler connecting the second antenna with the power detector.

The method can further comprise determining, via the processor, the received power by communicating with a power detector for detecting power at the second antenna, the device can further comprise a switch for switching the second antenna from an antenna receive circuit to the power detector.

The method can further comprise tuning, via the processor, the second antenna to a same channel on which the first antenna is transmitting.

The method can further comprise turning, via the processor, the first antenna on and off in a given sequence; and determining, via the processor, that the first antenna and the second antenna are properly installed when the received power at the second antenna is received according to the given sequence and is above the threshold power level.

Yet a further aspect of the specification provides a computer program product, comprising a computer usable medium having a computer readable program code adapted to be executed to implement a method comprising: transmitting, via a processor of a device, a given power level on a first antenna of the device; and, determining, at the processor, that the first antenna and a second antenna of the device are properly installed when received power at the second antenna is about greater than or equal to a threshold power level.

### BRIEF DESCRIPTIONS OF THE DRAWINGS

For a better understanding of the various implementations described herein and to show more clearly how they may be carried into effect, reference will now be made, by way of example only, to the accompanying drawings in which:

Fig. 1 depicts a device for testing antennas, according to non-limiting implementations.

Fig. 2 depicts a flowchart of a method for testing antennas, according to non-limiting implementations.

Fig. 3 depicts the device of Fig. 1 showing a second antenna receiving power from a first antenna in a transmit mode in a test of the antennas, according to non-limiting implementations.

Fig. 4 depicts a Graphic User Interface indicating that the test of Fig. 3 was successful, according to non-limiting implementations.

Fig. 5 depicts a Graphic User Interface indicating that the test of Fig. 3 was unsuccessful, according to non-limiting implementations.

Fig. 6 depicts the device of Fig. 1 implementing an alternative on the test of Fig. 3, according to non-limiting implementations.

Fig. 7 depicts another device for testing antennas, according to non-limiting implementations.

Fig. 8 depicts yet a further device for testing antennas, according to non-limiting implementations.

### DETAILED DESCRIPTION

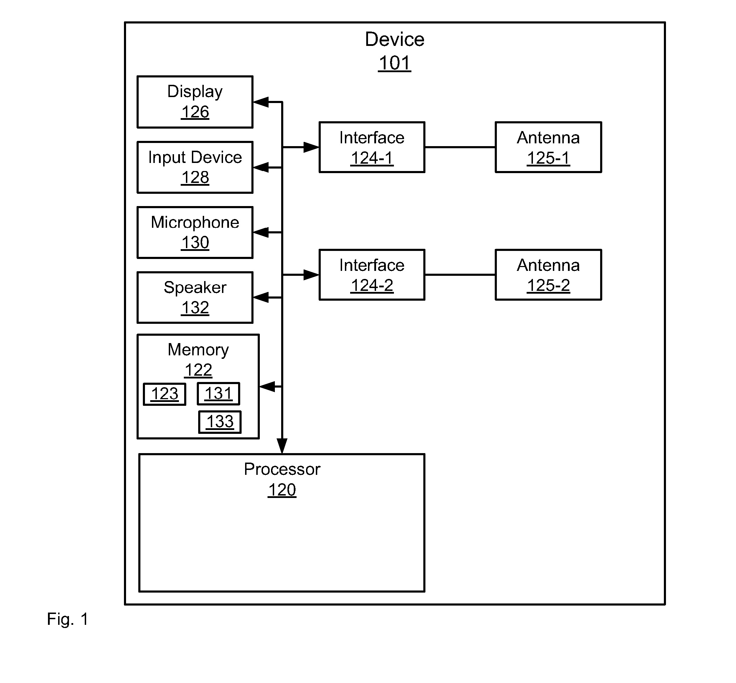

Fig. 1 depicts a schematic diagram of a device 101 for testing antennas, according to non-limiting implementations. Device 101 comprises a processor 120 interconnected with a memory 122, communications interfaces 124-1, 124-2, a first antenna 125-1, a second antenna 125-2, a display 126 and an input device 128, and optionally a microphone 130 and speaker 132. Communications interfaces 124-1, 124-2 will be interchangeably referred to, generically, as an interface 124, and collectively as interfaces 124. Antennas 125-1, 125-2 will be interchangeably referred to, generically, as an antenna 125, and collectively as antennas 125. As will be presently explained, processor 120 is generally enabled to test antennas 125; specifically, processor 120 is enabled to: transmit a given power level on the first antenna 125-1; and, determine that first antenna 125-1 and second antenna 125-2 are properly installed when received power at second antenna 125-2 is about greater than or equal to a threshold power level.

Device 101 can be any type of electronic device that can be used in a self-contained manner to communicate with one or more communication networks using antennas 125. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations.

It should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony, in other implementations, device 101 can comprise a device enabled for implementing any suitable specialized functions, including but not limited to one or more of telephony, computing, appliance, and/or entertainment related functions.

Device 101 comprises at least one input device 128 generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations.

Input from input device 128 is received at processor 120 (which can be implemented as a plurality of processors, including but not limited to one or more central processors (CPUs)). Processor 120 is configured to communicate with a memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art will now recognize that memory 122 is an example of computer readable media that can store programming instructions executable on processor 120. Furthermore, memory 122 is also an example of a memory unit and/or memory module.

In particular, it is appreciated that memory 122 stores an application 123 that, when processed by processor 120, enables processor 120 to: transmit a given power level on the first antenna 125-1; and, determine that first antenna 125-1 and second antenna 125-2 are properly installed when received power at second antenna 125-2 is about greater than or equal to a threshold power level.

Further, application 123 can comprise an application that is processed when device 101 is placed into a test mode to test antennas 125, and specifically to test whether antennas 125 are properly installed at device 101. For example, it is appreciated that application 123 may not be normally accessible to a consumer user of device 101, but can be accessed by placing device 101 into a test mode, either via a given command sequence received at input device 128 and/or via a test mode command received at one or more of interfaces 124, and/or any other suitable interface.

Memory 122 can further store given power level data 131 and threshold power level data 133. Given power level data 131 comprises data indicative of a given power level to be transmitted by first antenna 125-1 when application 123 is processed by processor 120. Threshold power level data 133 comprises data indicative of a given threshold power to be received by second antenna 125-2 when application 123 is processed by processor 120. It is appreciated that given power level data 131 and threshold power level data 133 are commensurate with one another; for example, the threshold power level comprises the power level to be received by second antenna 125-2 when first antenna 125-1 is transmitting the given power level indicated in given power level data 131 and both antennas 125 are properly installed. The given power level and corresponding threshold power level can be determined by previous testing of devices similar to device 101 where the antennas were known to be properly installed, and/or by previous testing of device 101 where antennas 125 were known to be previously properly installed.

Further, in some implementations threshold power level data can comprise a plurality of threshold power levels each corresponding to respective given power levels.

It is yet further appreciated that given power level data 131 and threshold power level data 133 can be stored together in single file and/or separately and or in application 123.

Processor 120 can be further configured to communicate with display 126, and optionally microphone 130 and speaker 132. Display 126 comprises any suitable one of, or combination of, CRT (cathode ray tube) and/or flat panel displays (e.g. LCD (liquid crystal display), plasma, OLED (organic light emitting diode), capacitive or resistive touchscreens, and the like). Microphone 130, when present, comprises any suitable microphone for receiving sound data. Speaker 132, when present, comprises any suitable speaker for providing sound data, audible alerts, audible communications from remote communication devices, and the like, at device 101.

In some implementations, input device 128 and display 126 are external to device 101, with processor 120 in communication with each of input device 128 and display 126 via a suitable connection and/or link.

It is yet further appreciated that device 101 comprises an indicator device that is controlled by processor 120 to indicate whether antennas 125 are properly installed when application 123 is implemented, the indicator device for indicating a result of testing antennas 125 using application 123. In specific non-limiting implementations described herein, the indicator device comprises one or more of display 126 and speaker 132. In other words, when application 123 is processed by processor 120, one or more of display 126 and speaker 132 is controlled to indicate whether antennas 125 are properly installed or not, via one or more of a suitable indicator(s) provided at display 126 and a suitable sound(s) provided at speaker 132. However, in other implementations, the indicator device could include, but is not limited to, one or more of a light, an LED (light emitting diode), a vibration device, and the like.

Processor 120 also connects to interfaces 124, each of which can be implemented as one or more radios and/or connectors and/or network adaptors, configured to wirelessly communicate with one or more communication networks (not depicted) via antennas 125. In some implementations device 101 comprises a single interface 124 (e.g. interfaces 124-1, 124-2 are combined into one interface 124). It will be appreciated that each interface 124 is configured to correspond with network architecture that is used to implement one or more communication links to the one or more communication networks, including but not limited to any suitable combination of USB (universal serial bus) cables, serial cables, wireless links, cell-phone links, cellular network links (including but not limited to 2G, 2,5G, 3G, 4G+, UMTS (Universal Mobile Telecommunications System), CDMA (Code division multiple access), WCDMA (Wideband CDMA), FDD (frequency division duplexing), TDD (time division duplexing), TDD-LTE (TDD-Long Term Evolution), TD-SCDMA (Time Division Synchronous Code Division Multiple Access) and the like) wireless data, Bluetooth links, NFC (near field communication) links, WiFi links, WiMax links, packet based links, the Internet, analog networks, the PSTN (public switched telephone network), access points, and the like, and/or a combination.

Further, one or more of interfaces 124, can comprise a wired interface enabled to communicate with other devices using cables, wires, connectors and the like, including but not limited to any suitable combination of cable interfaces, packet based interfaces, Internet interfaces, analog network interfaces, PSTN (public switched telephone network) interfaces, and the like. In yet further implementations, device 101 can comprise at least a third interface (not depicted) dedicated to wired connections, such that testing of antennas 125 using application 123 can be initiated by an external computing device wired to device 101.

In any event, whether one interface 124 or two or more interfaces 124, device 101 comprises at least two antennas 125, each corresponding to a respective interface 124. Antennas 125 can be the similar or different and in any event correspond to a network architecture of the respective interface 124 as described above. For example, antennas 124 can be separate WiFi and Bluetooth antennas, MIMO (multiple-input and multiple-output) systems and/or separate diversity antennas from the main antenna. For example, in some implementations, first antenna 125-1 can comprise a main antenna, and second antenna 125-2 can comprise a diversity antenna and/or a secondary antenna.

Indeed, the type of each antenna 125 is appreciated to be largely non-limiting; however, second antenna 125-1 is enabled to receive at least a portion of signals transmitted by first antenna 125-2. In other words, there is at least some overlap between a transmitting band of frequencies of first antenna 125-1 and a receiving band of frequencies of second antenna 125-2.

It is yet further appreciated that in some implementations antennas 125 comprise omnidirectional antennas such that their general position relative to one another is largely irrelevant, though generally, in mobile devices, there is some degree of isolation between, for example, a main antenna and a diversity antenna, the isolation on the order of about 15db.

However, in other implementations one or more of antennas 125 can comprise directional antennas. In these implementations, antennas 125 are arranged relative to one another such that second antenna 125-2 can receive signals from first antenna 125-1.

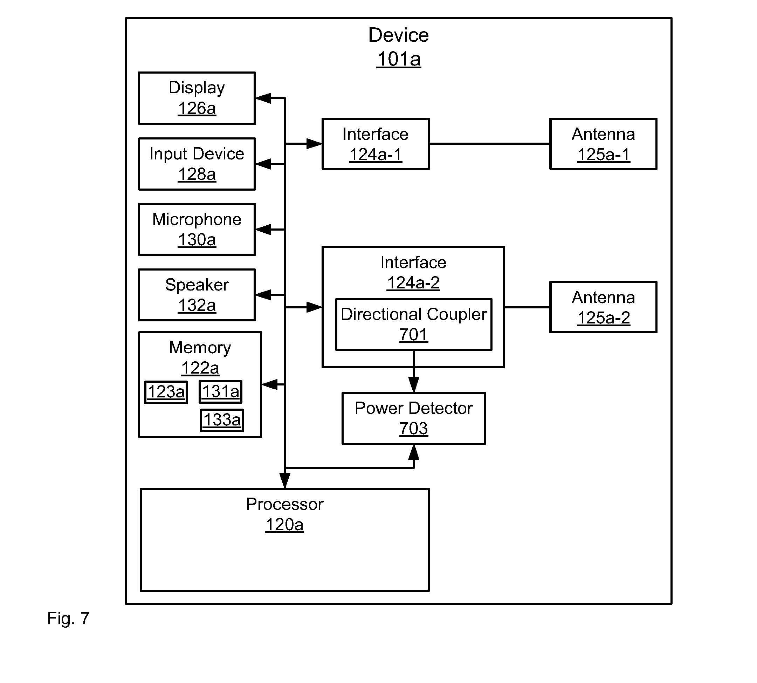

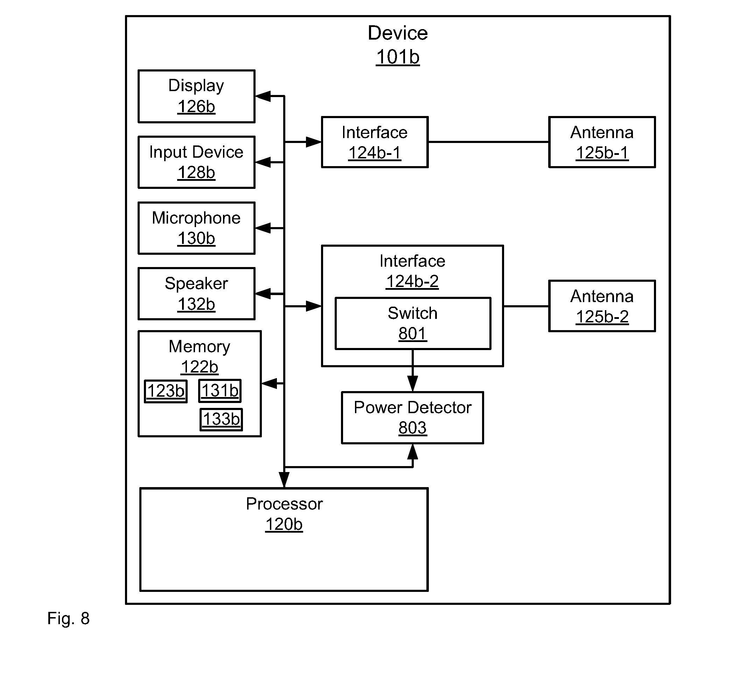

It is yet further appreciated that to measure received power of second antenna 125-2, interface 124-2 comprises an independent diversity receive port such that the received power level measurement can occur. It is further appreciated that interface 124-2 can hence comprise any suitable combination of components for measuring power received by second antenna 125-2. Examples of such components are described below with reference to Figs. 7 and 8, and can include, but are not limited to, directional couplers, power detectors and switches. Directional couplers and switches can be useful in implementations where second antennas 125-2 cannot be independently tuned from antennas 125-1.

It is yet further appreciated that device 101 comprises a power source, not depicted, for example a battery or the like. In some implementations the power source can comprise a connection to a mains power supply and a power adaptor (e.g. and AC-to-DC (alternating current to direct current) adaptor). In implementations where device 101 is enabled to receive a battery, device 101 can comprise a battery bay for accepting the battery, and connectors to a battery therein can be connected to an external power supply to power device 101, for example during testing of device 101 at a factory, a testing center or the like.

In any event, it should be understood that a wide variety of configurations for device 101 are contemplated.

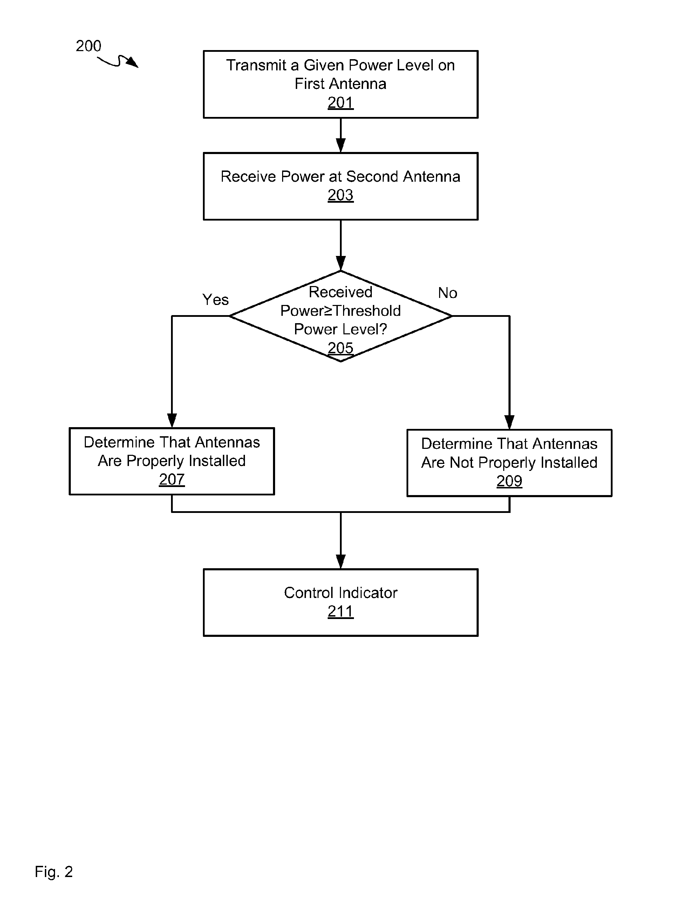

Hence attention is now directed to Fig. 2 which depicts a flowchart of a method 200 for testing antennas, according to non-limiting implementations. In order to assist in the explanation of method 200, it will be assumed that method 200 is performed using device 101 to test antennas 125. Furthermore, the following discussion of method 200 will lead to a further understanding of device 101 and its various components. However, it is to be understood that device 101 and/or method 200 can be varied, and need not work exactly as discussed herein in conjunction with each other, and that such variations are within the scope of present implementations.

It is appreciated that, in some implementations, method 200 is implemented in device 101 by processor 120 processing application 123. Indeed, method 200 is one way in which device 101 can be configured. It is to be emphasized, however, that method 200 need not be performed in the exact sequence as shown, unless otherwise indicated; and likewise various blocks may be performed in parallel rather than in sequence; hence the elements of method 200 are referred to herein as "blocks" rather than "steps". It is also to be understood, however, that method 200 can be implemented on variations of device 101 as well.

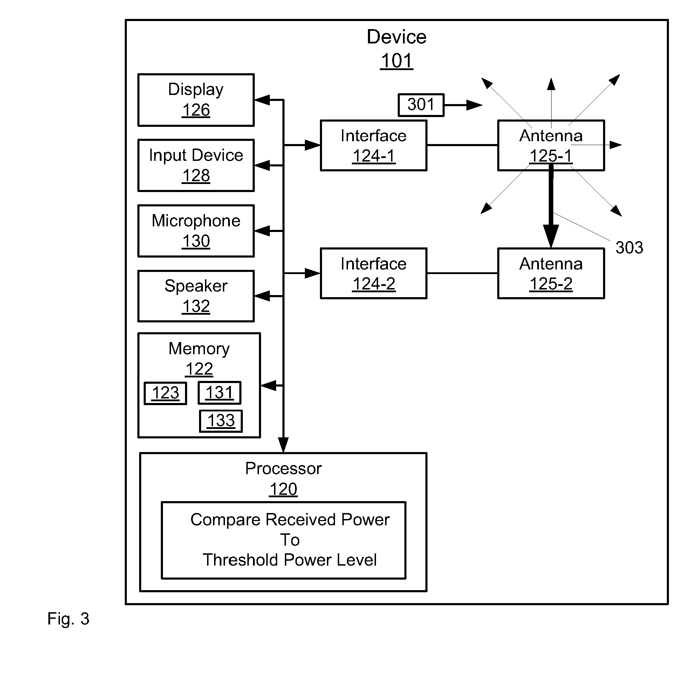

Further, the following discussion of method 200 will be done with reference to Figs. 3, which is similar to Fig. 1, with like elements having like numbers. The following discussion further assumes that processor 120 is processing application 123, for example when device 101 has been placed into a test mode, for example at a factory. However, device 101 could also be placed in a test mode "in the field" for example after receiving a given input sequence at input device 128 and/or when device 101 is under control of an external computing device (not depicted) connected thereto by an appropriate link, including but not limited to a cable. For example, a technician could remotely control device 101 via a network connection to the external computing device and the appropriate link.

At block 201, processor 120 transmit a given power level on the first antenna 125-1. For example, processor 120 can operate the first antennas 125-1 in a transmit mode. Further, the given power level can be pre-configured at application 123 and/or received at input device 128. In some implementations, the given power level is a maximum power level that first antenna 125-1 is capable of transmitting; however, in other implementations, the given power level can be a suitable fraction of the maximum power level that corresponds to a given threshold power level stored in given threshold power level data 133, as described above.

For example, as depicted in Fig. 3, processor 120 has controlled first antenna 125-1 to transmit a given power level, as indicated by given power level data 131, by controlling interface 124-1 to deliver a given level of power 301 to first antenna 125-1. In these implementations, first antenna 125-1 comprises an omnidirectional antenna and transmits the power in all directions (though it is appreciated that omnidirectional antennas with blind spots are within the scope of present implementations assuming second antenna 125-2 is not in such a blind spot). The transmission of power from antenna 125-1 is represented in Fig. 3 by the arrows radiating from first antenna 125-1.

In particular, received power 303 at antenna 125-2 is represented by an arrow from arrow antenna 125-1 to antenna 125-2, power 303 comprising power transmitted by antenna 125-1 that is received at antenna 125-2. It is hence further assumed that antenna 125-2 is being operated, at least in part, in a receive mode. In some implementations, processor 120 is further enabled to operate second antenna 125-2 in the receive mode when second antenna 125-2 is not already in the receive mode.

However, in other implementations, second antenna 125-2 cannot be independently tuned from antenna 125-1, and it is appreciated that power measurements occur in interface 124-2, similar to implementations described below with reference to Figs. 7 and 8.

Returning to Fig. 2, at block 203 processor 120 receives power 303 at second antenna 125-2. As described above, the frequency bands of antennas 125 are appreciated to at least partially overlap. In some implementations, however, processor 120 tunes second antenna 125-2 to a similar frequency and/or channel on which first antenna 125-1 is transmitting to better receive power there from. For example, when device 101 operates according to time division duplexing (TDD), such as with TDD-LTE, WiMAX or TD-SCDMA, the transmit and receive frequencies are the same.

At block 205 (and as also indicated in Fig. 3) processor 120 compares received power 303 at antenna 125-2 to the threshold power level indicated in threshold power level data 133. It is assumed that device 101 hence comprises a power detector, which can be implemented through a combination of hardware and software, for example via sampling of power received at antenna 125-2. In any event, in these implementations, it is assumed that interface 124-2 comprises a power detector, which determines and/or measures the level of received power 303 at antenna 125-2. It is yet further appreciated that demodulation of received power 303 is not required in present implementations, as any modulation data in received power 303 is generally irrelevant to received power level.

At block 205, when received power 303 is about greater than or equal to the threshold power level indicated in threshold power level data 133 (i.e. a "Yes" decision at block 205), at block 207, processor 120 determines that antennas 125 are properly installed. However, at block 205, when received power 303 is below the threshold power level indicated in threshold power level data 133 (i.e. a "No" decision at block 205), at block 209, processor 120 determines that antennas 125 are not properly installed. As described above, such a determination is made as the threshold power has been previously determined to be the power level to be received at antenna 125-2 when antennas 125 are properly installed and first antenna 125-1 is transmitting at the given power level indicated in the given power level data 131.

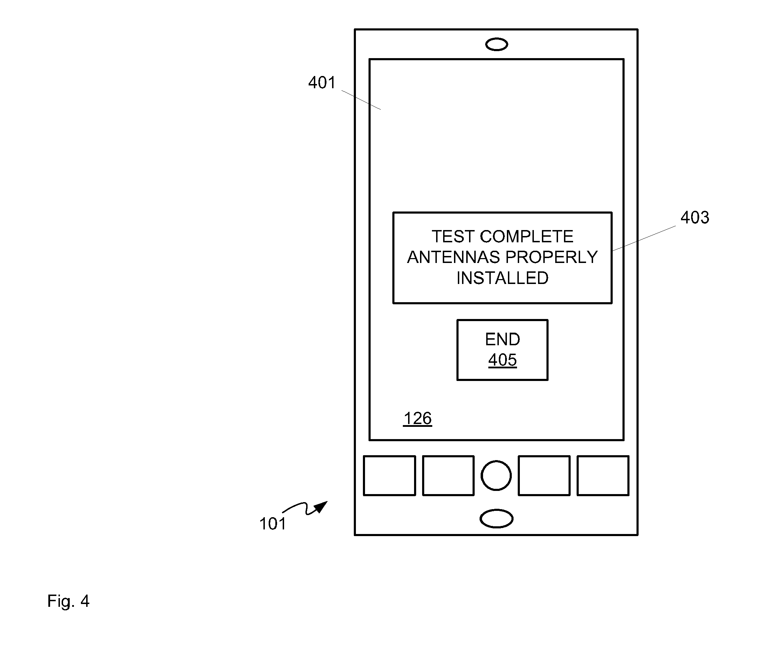

At block 211, processor 120 controls the indicator device to provide an indication of proper installation or improper installation, depending on the decision at block 205. For example, Fig. 4 depicts a rendering of a graphic user interface (GUI) 401 of application 123 at display 126 of device 101 that is provided when a "Yes" decision occurs at block 205. These implementations assume that the indicator device comprises display 126. Hence, when processor 120 determines that antennas 125 are properly installed, processor 120 controls indicator device/display 126 to provide an indicator 403 of proper installation; in depicted implementations, indicator 403 comprises text "TEST COMPLETE ANTENNAS PROPERLY INSTALLED". A virtual button 405 is also provided in GUI 401 to "END" the test and hence cease processing of application 123.

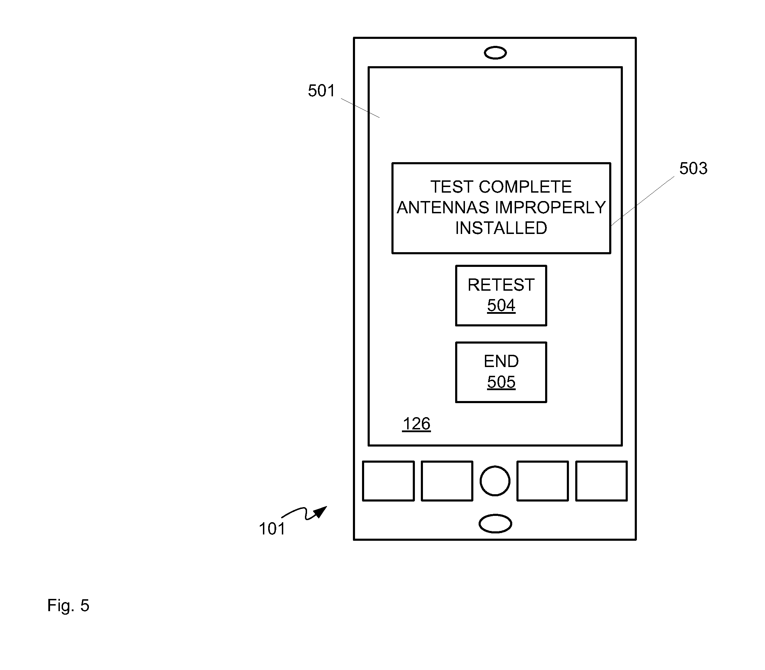

Conversely, when a "No" decision occurs at block 205, and processor 120 determines that antennas 125 are not properly installed, processor 120 controls indicator device/display 126 to provide an indicator 503 of improper installation as depicted in Fig. 5; in depicted implementations, indicator 503 comprises text "TEST COMPLETE ANTENNAS IMPROPERLY INSTALLED". A virtual button 504 can be provided in GUI 501 to "RETEST" antennas 125, which causes blocks 201 to 211 to reoccur. A virtual button 505 is also provided in GUI 501 to "END" the test and hence cease processing of application 123.

In yet further implementations, when a "No" decision occurs at block 205, processor 120 can transmit an indicator of improper installation to an external computing device, for example using a wired interface; a wireless interface 124 can alternatively be used but could be unreliable due to improper installation of antennas 125.

In any event, the result of a "No" decision at block 205 could, in some implementations, trigger remedial action at device 101, including but not limited to further testing and/or an automatic reinstallation of one or more of antennas 125 in an automated factory.

Persons skilled in the art will appreciate that there are yet more alternative implementations and modifications possible. For example, in some implementations, method 200 can be implemented for a plurality of frequencies. In other words, method 200 can be implemented a first time with first antenna 125-1 transmitting on a first frequency, and then implemented any given further number of times with first antenna 125-1 transmitting on any given number of further frequencies in order to test installation of antennas 125 across a range of frequencies. In these implementations, given power level data 131 and threshold power level data 133 can store given power levels and respective corresponding threshold power levels for each frequency. Indeed, in these implementations, given power level data 131 and threshold power level data 133 can be combined into a lookup table and/or database structure or the like.

In some implementations, a false positive can occur in method 200 when interference from other power sources occurs at second antenna 125-2. For example, when method 200 is being performed in a factory and/or a test centre, power from an antenna at another device on a neighbouring test bench can be received at antenna 125-2. To overcome this problem, in some implementations, processor 120 is further enabled to: tune first antenna 125-1 on and off in a given sequence at block 201; and, at block 205 determine that antennas 125 are properly installed when the received power at second antenna 125-2 is received according to the given sequence and is above one more given threshold power levels as indicated in threshold power level data 133. The given sequence can be stored at memory 122, for example, in given power level data 131 and/or in threshold power level data 133 and/or in application 123 and/or as separate data.

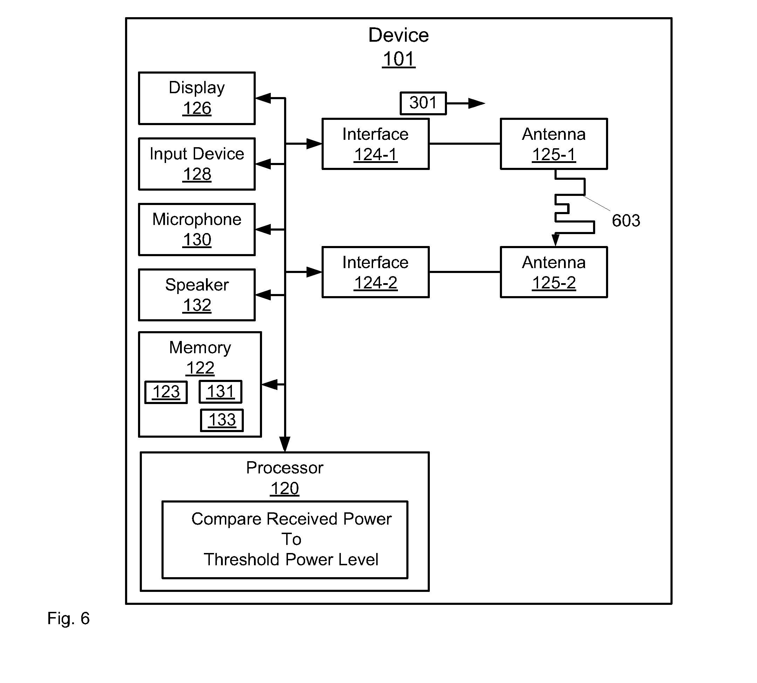

For example, as depicted in Fig. 6, power transmitted by first antenna 125-1 is transmitted in a given sequence such that received power 603 at antenna 125-2 comprises the given sequence. As depicted received power 603 comprises a sequence of power pulses of varying height and width and/or with varying amount of time there between. It is further appreciated that other power transmitted by first antennas 125-1 is not depicted in Fig. 6 for clarity (i.e. power can be radiated in all directions, as in Fig. 3, but only received power 603 is depicted). In any event, at block 205, processor 120 determines whether received power 603 has the profile of the given sequence stored at memory 122. Such a comparison can further comprise comparing a height of each power pulse in received power 603 to a respective threshold power level stored at threshold power level data 133, as well as the length of time of each power pulse and the length of time between power pulses; in other words, in these implementations, each power pulse in the given sequence corresponds to a respective threshold power level stored at threshold power level data 133. Put yet another way, in these implementations, threshold power level data 133 stores a threshold power level profile and processor 120 compares received power 603 to the threshold power level profile.

Further, the given sequence can be at least partially randomly generated, by processor 120 and/or by an external computing device that configures device 101, and specifically configures given power level data 131 and threshold power level data 133. In these implementations, the given sequence can be randomly generated by device 101 once the respective threshold power levels corresponding to a given power level are determined, as the length of time of each power pulse and the length of time between power pulses need not be predetermined, but the relationship between threshold power level and the given power transmitted is directly dependent on proper or improper installation of antennas 125.

It is yet further appreciated that the given sequence is independent of any modulating of received power 603 that can occur in each power pulse. In other words, any information encoded in received power 603 is irrelevant and other than measuring the given sequence, there is no need to demodulate received power 603.

In current architectures of mobile devices, method 200 can be implemented with a primary antenna and a receive diversity antenna designed for frequency division duplexing ("FDD") operation, such as CDMA ("Code Division Multiple Access") or WCMDA ("Wideband Code Division Multiple Access"). For example, in specific non-limiting implementations, a signal would be transmitted from a primary antenna on a first band, including but not limited to UMTS Band 1, at block 201 and received on a secondary antenna on a second band, including but not limited to UMTS Band 2, at block 203. It is yet further appreciated that demodulation of the signal is not needed and the secondary receiver only needs to measure the power level of the signal. When the power level is above a given threshold then both antennas are properly functioning.

In some implementations, devices comprise multiple transmit antennas for different frequencies. In yet further implementations, the receive diversity receiver cannot be independently tuned from the transmitter. In both of these implementations, an interface to the receiving antenna is adapted to comprise a power detector.

For example, attention is next directed to Fig. 7 which depicts an alternative device 101a for testing antennas according to non-limiting implementations. Fig. 7 is substantially similar to Fig. 1, with like elements having like numbers, but with an "a", appended thereto. Device 101a hence comprises a processor 120a similar to processor 120, processor 120a interconnected with a memory 122a (storing application 123a, given power level data 131a and threshold power level data 133a), a first interface 124a-1, a second interface 124a-2, a first antenna 125a-1, a second antenna 125a-2, a display 126a, at least one input device 128a, an optional microphone 130a, and an optional speaker 132a. It is assumed in Fig. 7 that first antenna 125a-1 is the transmitting antenna, corresponding to first antenna 125-1, and second antenna 125a-2 is the receiving antenna, corresponding to antenna 125-2, when method 200 is implemented at device 101a.

However, in these implementations, interface 124a-2 comprises a directional coupler 701 connected to a power detector 703, which is in turn interconnected with processor 120a. It is appreciated that directional coupler 701 is generally located at a receive antenna port of interface 124a-2. In these implementations, processor 120a can determine received power at block 205 by communicating with power detector 703, directional coupler 701 sampling a portion of the received power at antenna 125a-2. Method 200 otherwise proceeds as described above.

Power detector 703 comprises any suitable RF (radio-frequency) power detector, including but not limited to a self contained power detector component, a power detector circuit integrated into interface 124a-2 or any other suitable component of device 101a, and the like.

Attention is next directed to Fig. 8 which depicts yet a further alternative device 101b for testing antennas according to non-limiting implementations. Fig. 8 is substantially similar to Fig. 1, with like elements having like numbers, but with a "b", appended thereto. Device 101b hence comprises a processor 120b similar to processor 120, processor 120b interconnected with a memory 122b (storing application 123b, given power level data 131b and threshold power level data 133b), a first interface 124b-1, a second interface 124b-2, a first antenna 125b-1, a second antenna 125b-2, a display 126b, at least one input device 128b, an optional microphone 130b, and an optional speaker 132b. It is assumed in Fig. 8 that first antenna 125b-1 is the transmitting antenna, corresponding to first antenna 125-1, and second antenna 125b-2 is the receiving antenna, corresponding to antenna 125-2, when method 200 is implemented at device 101b.

However, in these implementations, interface 124b-2 comprises at least one switch 801 connected to a power detector 803 (similar to power detector 703), which is in turn interconnected with processor 120b. It is appreciated that switch 801 can include, but is not limited to, an SPXT (single pole X throw, where X = the number of receive diversity bands supported by antenna 125b-2, each of these throws connected to a corresponding antenna receive circuit for each diversity band + an additional throw for power detector 803). In these implementations, processor 120b can determine received power at block 205 by communicating with interface 124b-2 to cause switch 801 to switch from an antenna receive circuit to power detector 803, and then by communicating with power detector 803 as described above. Once the power level is determined, switch 801 is switched back to an appropriate antenna receive circuit. Method 200 otherwise proceeds as described above.

In each of device 101a, 101b, any suitable transmit frequency can be used and a diversity port (i.e. at interfaces 124a-2, 124b-2, respectively connected to second antennas 125a-2 125b-2) need not be tuned to the same band as a main port (i.e. at interfaces 124a-1, 124b-1, respectively connected to first antennas 125a-1, 125b-1).

Hence, convenient devices and methods for testing antennas are described herein that replace expensive test equipment by using existing capabilities of the antennas to be tested. Further, devices and methods described herein further enable field testing of antenna installation, for example when a problem occurs with antennas in the field; as such problems with antennas can be confirmed or ruled out as a problem obviating a need to have a device returned to a factory or the like for remedial testing.

Those skilled in the art will appreciate that in some implementations, the functionality of devices 101, 101a, 101b can be implemented using pre-programmed hardware or firmware elements (e.g., application specific integrated circuits (ASICs), electrically erasable programmable read-only memories (EEPROMs), etc.), or other related components. In other implementations, the functionality of devices 101, 101a, 101b can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device (101, 101a, 101b) comprising:
a processor (120, 120a, 120b), a first antenna (125-1, 125a-1, 125b-1) and a second antenna (125-2, 125a-2, 125b-2), the processor (120, 120a, 120b) enabled to:
transmit a given power level on the first antenna (125-1, 125a-1, 125b-1); and,
determine that the first antenna (125-1, 125a-1, 125b-1) and the second antenna (125-2, 125a-2, 125b-2) are properly installed when received power at the second antenna (125-2, 125a-2, 125b-2) is about greater than or equal to a threshold power level.

2. The device (101, 101a, 101b) of claim 1, wherein the processor (120, 120a, 120b) is further enabled to: operate the first antenna (125-1, 125a-1, 125b-1)s in a transmit mode; and, operate the second antenna (125-2, 125a-2, 125b-2) in a receive mode.

3. The device (101, 101a, 101b) of any of claims 1 to 2, wherein each of the first antenna (125-1, 125a-1, 125b-1) and the second antenna (125-2, 125a-2, 125b-2) are omnidirectional.

4. The device (101, 101a, 101b) of any of claims 1 to 3, wherein at least one of the first antenna (125-1, 125a-1, 125b-1) and the second antenna (125-2, 125a-2, 125b-2) is a directional antenna and the second antenna (125-2, 125a-2, 125b-2) is arranged to receive power from the first antenna (125-1, 125a-1, 125b-1).

5. The device (101, 101a, 101b) of any of claims 1 to 4, further comprising an indicator device (101, 101a, 101b), and the processor (120, 120a, 120b) is further enabled to control the indicator device (101, 101a, 101b) to provide an indication of proper installation when the received power at the second antenna (125-2, 125a-2, 125b-2) is about greater than or equal to the threshold power level, and otherwise control the indicator device (101, 101a, 101b) provide an indication of improper installation when the received power at the second antenna (125-2, 125a-2, 125b-2) is below the threshold power level.

6. The device (101, 101a, 101b) of any of claims 1 to 5, further comprising:
a power detector (703, 803) for detecting power at the second antenna (125-2, 125a-2, 125b-2), the processor (120, 120a, 120b) further enabled to determine the received power by communicating with the power detector (703, 803); and,
a directional coupler (701) connecting the second antenna (125-2, 125a-2, 125b-2) with the power detector (703, 803).

7. The device (101, 101a, 101b) of any of claims 1 to 6, further comprising:
a power detector (703, 803) for detecting power at the second antenna (125-2, 125a-2, 125b-2), the processor (120, 120a, 120b) further enabled to determine the received power by communicating with the power detector (703, 803); and,
a switch (801) for switch (801)ing the second antenna (125-2, 125a-2, 125b-2) from an antenna receive circuit to the power detector (703, 803).

8. The device (101, 101a, 101b) of any of claims 1 to 7, wherein the processor (120, 120a, 120b) is further enabled to tune the second antenna (125-2, 125a-2, 125b-2) to a same channel on which the first antenna (125-1, 125a-1, 125b-1) is transmitting.

9. The device (101, 101a, 101b) of any of claims 1 to 8, wherein the processor (120, 120a, 120b) is further enabled to:
turn the first antenna (125-1, 125a-1, 125b-1) on and off in a given sequence; and
determine that the first antenna (125-1, 125a-1, 125b-1) and the second antenna (125-2, 125a-2, 125b-2) are properly installed when the received power at the second antenna (125-2, 125a-2, 125b-2) is received according to the given sequence and is above the threshold power level.

10. A method comprising:
transmitting, via a processor (120, 120a, 120b) of a device (101, 101a, 101b), a given power level on a first antenna (125-1, 125a-1, 125b-1) of the device (101, 101a, 101b); and,
determining, at the processor (120, 120a, 120b), that the first antenna (125-1, 125a-1, 125b-1) and a second antenna (125-2, 125a-2, 125b-2) of the device (101, 101a, 101b) are properly installed when received power at the second antenna (125-2, 125a-2, 125b-2) is about greater than or equal to a threshold power level.

11. The method of claim 10, further comprising operating, via the processor (120, 120a, 120b), the first antenna (125-1, 125a-1, 125b-1)s in a transmit mode; and, operating the second antenna (125-2, 125a-2, 125b-2) in a receive mode.

12. The method of any of claims 10 to 11, further comprising controlling, via the processor (120, 120a, 120b), an indicator device (101, 101a, 101b) to provide an indication of proper installation when the received power at the second antenna (125-2, 125a-2, 125b-2) is about greater than or equal to the threshold power level, and otherwise controlling, via the processor (120, 120a, 120b), the indicator device (101, 101a, 101b) provide an indication of improper installation when the received power at the second antenna (125-2, 125a-2, 125b-2) is below the threshold power level.

13. The method of any of claims 10 to 12, further comprising:
determining, via the processor (120, 120a, 120b), the received power by communicating with a power detector (703, 803) for detecting power at the second antenna (125-2, 125a-2, 125b-2), the device (101, 101a, 101b) further comprising one of:
a directional coupler (701) connecting the second antenna (125-2, 125a-2, 125b-2) with the power detector (703, 803); and,
a switch (801) for switch (801)ing the second antenna (125-2, 125a-2, 125b-2) from an antenna receive circuit to the power detector (703, 803).

14. The method of any of claims 10 to 13, further comprising tuning, via the processor (120, 120a, 120b), the second antenna (125-2, 125a-2, 125b-2) to a same channel on which the first antenna (125-1, 125a-1, 125b-1) is transmitting.

15. The method of any of claims 10 to 14, further comprising:
turning, via the processor (120, 120a, 120b), the first antenna (125-1, 125a-1, 125b-1) on and off in a given sequence; and
determining, via the processor (120, 120a, 120b), that the first antenna (125-1, 125a-1, 125b-1) and the second antenna (125-2, 125a-2, 125b-2) are properly installed when the received power at the second antenna (125-2, 125a-2, 125b-2) is received according to the given sequence and is above the threshold power level.
